# NEUE EUROPÄISCHE PATENTSCHRIFT

(11) **EP 1 428 742 B2**
(45) Veröffentlichungstag und Bekanntmachung des Hinweises auf die Entscheidung über den Einspruch: **25.02.2009**
(45) Hinweis auf die Patenterteilung: 03.05.2006
(21) Anmeldenummer: 03026597.9
(22) Anmeldetag: 19.11.2003
(51) Int. Cl.: B62D 25/06

(54) **Fahrzeugdach**
Vehicle roof
Toit de véhicule

(30) Priorität: 09.12.2002 DE 10257398
(43) Veröffentlichungstag der Anmeldung: 16.06.2004
(73) Patentinhaber: ArvinMeritor GmbH, 63128 Dietzenbach (DE)
(72) Erfinder: Schönebeck, Horst, 63571 Gelnhausen (DE)
(74) Vertreter: Prinz & Partner

(56) Entgegenhaltungen:
- EP-A- 1 422 126
- EP-A1- 1 228 943
- EP-A2- 1 384 655
- WO-A-01/42051
- WO-A-03/045762
- DE-A- 19 709 016
- DE-A1- 19 709 016
- US-A1- 2005 104 418
- PATENT ABSTRACTS OF JAPAN vol. 2000, no. 05, 14. September 2000 (2000-09-14) -& JP 2000 062646 A (MAZDA MOTOR CORP), 29. Februar 2000 (2000-02-29)

## Beschreibung

Die Erfindung betrifft ein Fahrzeugdach gemäß dem Oberbegriff des Anspruchs 1.

Moderne Fahrzeugdächer bestehen nicht aus einem an dem Dachrahmen angeschweißten oder einstückig mit ihm ausgebildeten Blechdach, sondern zunehmend aus einem Dachrahmen, an dem ein von einem Zulieferer hergestelltes Dachmodul durch Kleben und Schrauben bleibend und starr befestigt ist. Bleibend und starr befestigt, soll nicht ausschließen, daß das Dachmodul zu Austauschzwecken in der Werkstatt vom Rahmen gelöst werden kann, um durch ein neues Dachmodul ausgetauscht zu werden, das dann erneut bleibend und starr an dem Dachrahmen befestigt wird. Das Dachmodul besteht dabei üblicherweise aus Kunststoff, mit einer Außenhaut aus beispielsweise einer Aluminium- oder Kunststoffolie, die hinterschäumt ist. Das Dachmodul muß am Dachrahmen auch bei einem Aufprall und einer starken Deformation des Dachrahmens befestigt bleiben. Bei einem Seitenaufprall, der durch einen Pfahltest simuliert wird, kommt es unmittelbar zu einer Deformation des Dachrahmens. Die Befestigung des Dachmoduls am Fahrzeugdach ist deshalb hohen Anforderungen ausgesetzt.

In der gattungsgemäßen JP-A-2000-062646 ist ein Fahrzeugdach beschrieben, das auf Höhe der B-Säule eine Verstärkung aufweist, die am Dachmodul und am Dachrahmen befestigt ist. Die Verstärkung weist einen Anschlag auf, der bei einer Deformation im Rahmen eines Seitenaufpralls in Anlage an den Dachrahmen gelangt.

Die DE-A-197 09 016 zeigt ein Dachmodul, das komplett vorgefertigt werden kann, bevor es an einem Fahrzeug montiert wird. Das Dachmodul ist mit einer eingeschäumten Versteifung versehen, die auch zur Befestigung des Dachmoduls am Dachrahmen verwendet wird.

Aus der nachveröffentlichten EP-A-1 422 126 geht hervor, daß ein starres Halteelement am Dachrahmen vorgesehen sein kann, das bei einer Verformung des Dachrahmens in Eingriff mit einem am Dachrahmen angeordneten Sicherungselement gelangt, um das Dachmodul am Fahrzeug zu halten.

Die Erfindung schafft ein Fahrzeugdach, bei dem die Verbindung zwischen Dachmodul und Dachrahmen weiter verbessert wird. Dies wird bei einem Fahrzeugdach der eingangs genannten Art durch die Merkmale des Anspruchs 1 erreicht. Das starre Sicherungselement sorgt nicht nur für eine formschlüssige Verriegelung bei einer Deformation des Dachrahmens, sondern es verstärkt auch noch das Dachmodul selbst. Wenn der Dachrahmen mit seinem einwärts, d.h. zum Sicherungselement weisenden Rand durch Deformation horizontal verschoben wird, verschiebt sich der Rand über den vorstehenden Abschnitt des Dachmoduls, so daß das Sicherungselement den Rand hintergreift. Ein Abheben des Dachmoduls vom Dachrahmen wird damit selbst dann verhindert, falls die Befestigung von Dachrahmen und Dachmodul abschnittsweise zerstört werden würde. Bei nicht deformiertem Dachrahmen liegt der vorstehende Abschnitt seitlich des Randes, er hintergreift also den Rand noch nicht. Dies ermöglicht es, daß das Dachmodul von oben auf den Dachrahmen aufgesetzt wird. Das Sicherungselement liegt aber fast unmittelbar angrenzend an dem Rand, so daß schon bei kleiner Deformation des Dachrahmens der Rand vom Sicherungselement "gefangen" wird.

Der Rand ist vorzugsweise ein flanschartiger, einwärts weisender Fortsatz des Dachrahmens. Der Dachrahmen ist ein Hohlprofil, von dem ein horizontaler, vorzugsweise geschlossen umlaufender dünner Blechflansch nach innen absteht, der der Befestigung, der Zentrierung und Auflage des Dachmoduls dient. Dieser Blechflansch ist gemäß der bevorzugten Ausführungsform der Rand des Dachrahmens, unter den das Sicherungselement bei Deformation des Dachrahmens greift.

Das Dachmodul ist vorzugsweise an diesem Rand befestigt, insbesondere durch Kleben und Schraubverbindungen, wobei eine entsprechende Kleberaupe gemäß der bevorzugten Ausführungsform geschlossen am Rand umläuft.

Das Sicherungselement ist beispielsweise ein Blech.

Gemäß der Erfindung wird das Sicherungselement in eine unterseitige Hinterschäumung einer Außenhaut des Dachmoduls eingebettet. Diese Einbettung kann so ausgeführt sein, daß das Sicherungselement sogar vollständig in die Hinterschäumung eingebettet wird, was eine gute Befestigung des Sicherungselements in der Hinterschäumung gewährleistet. Die Hinterschäumung setzt aber dem sich horizontal verschiebaren Rand bei der Deformation des Dachrahmens keinen großen Widerstand entgegen, so daß der Rand in den Schaum eindringt und sich über den tiefer liegenden vorstehenden Abschnitt des Sicherungselements schieben kann.

Das Sicherungselement ist bei der bevorzugten Ausführungsform ein zum Rand des Dachrahmens offenes Hohlprofil, das bei horizontaler Verschiebung des Randes in Richtung zum Sicherungselement den Rand in sich aufnimmt. Das Hohlprofil sorgt bei deformiertem Dachrahmen für einen Formschluß in vertikaler Richtung nach oben und nach unten. Darüber hinaus sorgt das Hohlprofil für eine großflächige Krafteinleitung in den Schaum und verhindert, daß der Schaum durch den in den Schaum eintretenden Rand gespalten wird. Das Sicherungselement ist vorzugsweise ein C-Profil oder kann z.B. auch ein Doppel-T-Profil sein.

Wenn das Sicherungselement am Dachmodul unterseitig umläuft, kann es zusätzlich als Verstärkungsrahmen dienen und eine Doppelfunktion besitzen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur leine Draufsicht auf ein erfindungsgemäßes Fahrzeugdach,
- Figur 2einen Schnitt längs der Linie II-II durch das Fahrzeugdach im Bereich der Verbindung zwischen Dachrahmen und Dachmodul,
- Figur 3eine Schnittansicht des in Figur 2 gezeigten Bereichs bei einem durch einen Pfahltest deformierten Dachrahmen.

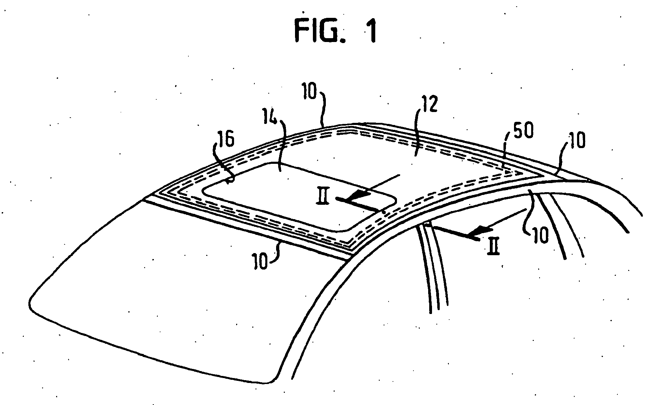

In Figur 1 ist ein Fahrzeugdach dargestellt, das einen geschlossen umlaufenden Dachrahmen 10 besitzt. Von oben auf den Dachrahmen 10 ist ein Dachmodul 12 aufgesetzt und am Dachrahmen bleibend und starr befestigt, d.h. das Dachmodul 12 ist nicht gegenüber dem Dachrahmen 10 verschieblich. Das Dachmodul 12 kann einen durch einen beweglichen Deckel 14 verschließbaren Dachausschnitt 16 haben, so daß das Dachmodul 12 ein integriertes Schiebedachsystem beinhalten kann.

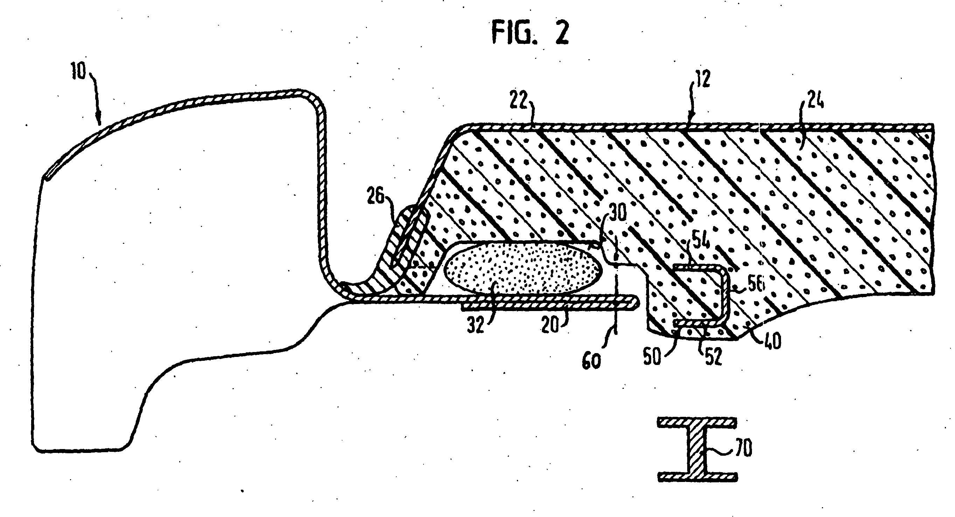

In Figur 2 ist zu erkennen, daß der Dachrahmen, der aus Blech besteht, ein im Schnitt geschlossenes Hohlprofil besitzt, von dem ein einwärts weisender Fortsatz in Form eines plattenförmigen, horizontalen, flanschartigen Randes 20 absteht. Auf diesem horizontalen, vorzugsweise über den gesamten Dachrahmen geschlossen umlaufenden Rand ist von oben das Dachmodul 12 aufgesetzt.

Das Dachmodul 12 hat eine Außenhaut 22, vorzugsweise eine tiefgezogene Kunststoffolie, mit einer Hinterschäumung 24 auf ihrer Unterseite, wobei die Hinterschäumung vorzugsweise aus PU-Material ist. Mit 26 ist eine Dichtung am Außenrand des Dachmoduls 12 bezeichnet, die einen dichten Abschluß zum Dachrahmen 10 sicherstellen soll. Die Hinterschäumung 24 hat im Bereich des Randes 20 eine nutartige Vertiefung 30, in der eine geschlossen über den gesamten Rand 20 umlaufende Kleberaupe 32 liegt, mittels der das Dachmodul 12 am Rand 20 befestigt ist. Zusätzlich können noch Schraubverbindungen 60 vorgesehen sein.

Wie in Figur 2 dargestellt, hintergreift das Dachmodul 12 den Dachrahmen 10 an keiner Stelle, so das es einfach von oben auf den Rand 20 aufgesetzt werden kann.

Unmittelbar an den Rand 20 angrenzend besitzt die Hinterschäumung 24 einen nach unten ragenden Wulst 40, der tiefer liegt als der Rand 20. Im Bereich des Wulstes 40 ist ein zum Rand 20 offenes C-förmiges Hohlprofil oder z.B. ein Doppel-T-Profil 70 vollständig in die Hinterschäumung 24 eingebettet. Das Hohlprofil bildet ein im Crashfall wirkendes Sicherungselement 50 für die Verbindung Dachrahmen zu Dachmodul. Der untere Schenkel 52 des Sicherungselements 50, also ein Abschnitt des Sicherungselements 50, liegt tiefer als der Rand 20, der obere Schenkel 54 liegt höher als der Rand 20. Wie in Figur 2 zu erkennen ist, grenzt das Sicherungselement 50 fast unmittelbar an den Rand 20 an.

Das Sicherungselement 50 bildet ein umlaufendes Verstärkungsprofil des Dachmoduls 12.

Gemäß einer alternativen Ausführungsform kann das Sicherungselement 50 nur längs der Seitenholme des Dachrahmens 10 befestigt sein, sich also nur in Fahrzeuglängsrichtung erstrecken, wobei hierbei zusätzlich optional Verbindungsstreben zwischen den zweiseitigen, schienenförmigen Sicherungselementen 50 vorgesehen sein könnten.

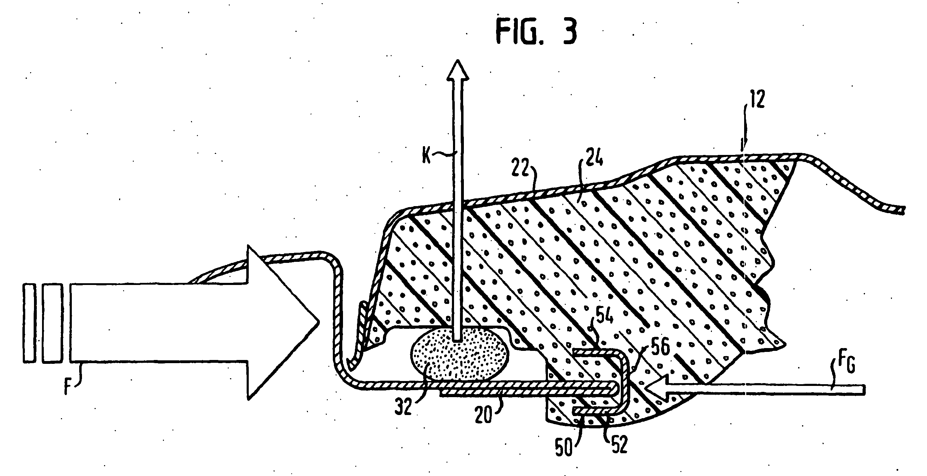

Die Funktionsweise des Sicherungselements 50 wird in Figur 3 ersichtlich. Bei einem Seitenaufprall, der durch einen sogenannten Pfahltest simuliert wird, wirkt eine horizontale, seitliche Kraft F auf den Dachrahmen 10 ein. Der Dachrahmen 10 wird horizontal seitlich deformiert, und sein Rand 20 wird horizontal seitlich verschoben. Der Rand 20 dringt in die Hinterschäumung 24 ein und wird zwischen den Schenkeln 52, 54 im Sicherungselement 50 aufgenommen, wobei er abhängig von der Höhe der Kraft F an den Verbindungssteg 56 der Schenkel 52, 54 stoßen kann. Selbst wenn eine nach oben gerichtete Kraft K auf die Kleberaupe 32 ausgeübt werden sollte, die die Kleberaupe 32 bis an die Grenzen ihrer Belastbarkeit bringt, so würde das Dachmodul 12 nicht vom Rand 20 abgelöst werden, da das Sicherungselement 50 das Dachmodul 12 nach oben und nach unten zusätzlich sichert. Darüber hinaus wird durch das Sicherungselement 50 des Dachmoduls 12 eine Gegenkraft F_{G} zur Kraft F ausgeübt, die die Stabilität des Daches insgesamt erhöht.

## Patentansprüche

1. Fahrzeugdach, mit einem Dachrahmen (10) und einem Dachmodul (12), das am Dachrahmen (10) bleibend und starr befestigt ist,
wobei der Dachrahmen (10) einen zum Dachmodul (12) einwärts weisenden Rand (20) hat und
im Bereich der Unterseite des Dachmoduls (12) ein starres Sicherungselement (50) vorgesehen ist, welches zumindest einen zum angrenzenden Rand (20) weisenden, vorstehenden Abschnitt hat, der tiefer als der Rand (20) positioniert ist,
wobei bei einer Deformation, bei der der Dachrahmen (10) horizontal verschoben wird, das Sicherungselement (50) den Rand (20) hintergreift, wobei das Sicherungselement (50) vor einer Deformation des Dachrahmens (10) den Rand (20) nicht hintergreift, und das Sicherungselement (50) in eine unterseitige Hinterschäumung (24) einer Außenhaut (22) des Dachmoduls (12) eingebettet ist.

2. Fahrzeugdach nach Anspruch 1, **dadurch gekennzeichnet, daß** der Rand (20) ein flanschartiger, einwärts weisender Fortsatz des Dachrahmens (10) ist.

3. Fahrzeugdach nach Anspruch 2, **dadurch gekennzeichnet, daß** der flanschartige Fortsatz ein plattenartiger Blechabschnitt ist.

4. Fahrzeugdach nach einem der vorhergehenden Ansprüche, **dadurch gekennzeichnet, daß** das Dachmodul (12) am Rand (20) befestigt ist.

5. Fahrzeugdach nach Anspruch 4, **dadurch gekennzeichnet, daß** das Dachmodul (12) an dem Rand (20) durch Kleben befestigt ist.

6. Fahrzeugdach nach Anspruch 5, **dadurch gekennzeichnet, daß** das Dachmodul (12) am Rand (20) umlaufend durch Kleben befestigt ist.

7. Fahrzeugdach nach einem der vorhergehenden Ansprüche, **dadurch gekennzeichnet, daß** das Dachmodul am Rand (20) zusätzlich durch wenigstens eine Schraubverbindung (60) gesichert ist.

8. Fahrzeugdach nach einem der vorhergehenden Ansprüche, **dadurch gekennzeichnet, daß** das Sicherungselement (50) ein Blech ist.

9. Fahrzeugdach nach Anspruch 8, **dadurch gekennzeichnet, daß** das Sicherungselement (50) vollständig in die Hinterschäumung (24) eingebettet ist.

10. Fahrzeugdach nach einem der vorhergehenden Ansprüche, **dadurch gekennzeichnet, daß** das Sicherungselement (50) ein zum Rand (20) offenes Hohlprofil ist, welches bei horizontaler Verschiebung des Randes (20) zum Sicherungselement (50) hin den Rand (20) in sich aufnimmt.

11. Fahrzeugdach nach einem der vorhergehenden Ansprüche, **dadurch gekennzeichnet, daß** das Sicherungselement (50) ein C-Profil ist.

12. Fahrzeugdach nach einem der Ansprüche 1 bis 10, **dadurch gekennzeichnet, daß** das Sicherungselement ein Doppel-T-Profil ist.

13. Fahrzeugdach nach einem der vorhergehenden Ansprüche, **dadurch gekennzeichnet, daß** das Sicherungselement (50) ein umlaufender Verstärkungsrahmen des Dachmoduls (12) ist.

14. Fahrzeugdach nach Anspruch 13, **dadurch gekennzeichnet, daß** der Verstärkungsrahmen ringförmig geschlossen ist.

## Claims

1. A vehicle roof comprising a roof frame (10) and a roof module (12) which is permanently and fixedly attached to the roof frame (10),
the roof frame (10) having an edge (20) that points inwardly toward the roof module (12) and
a rigid safety element (50) being provided in the region of the lower side of the roof module (12), which safety element has at least one protruding portion that points to the adjoining edge (20) and is positioned lower than the edge (20),
the safety element (50) engaging the edge (20) from behind during a deformation in which the roof frame (10) is displaced in horizontal direction, the safety element (50) not engaging the edge (20) from behind prior to a deformation of the roof frame (10), and the safety element (50) being embedded in a foam backing (24) of an outer skin (22) of the roof module (12), which foam backing is provided on the rear side of said outer skin.

2. The vehicle roof according to claim 1, **characterized in that** the edge (20) is a flange-like, inward-pointing extension of the roof frame (10).

3. The vehicle roof according to claim 2, **characterized in that** the flange-like extension is a plate-shaped sheet metal portion.

4. The vehicle roof according to any of the preceding claims, **characterized in that** the roof module (12) is attached to the edge (20).

5. The vehicle roof according to claim 4, **characterized in that** the roof module (12) is attached to the edge (20) by means of gluing.

6. The vehicle roof according to claim 5, **characterized in that** the roof module (12) is attached to the edge (20) along the full periphery by means of gluing.

7. The vehicle roof according to any of the preceding claims, **characterized in that** the roof module is additionally secured to the edge (20) by at least one screw connection (60).

8. The vehicle roof according to any of the preceding claims, **characterized in that** the safety element (50) is a sheet metal part.

9. The vehicle roof according to claim 8, **characterized in that** the safety element (50) is completely embedded in the foam backing (24).

10. The vehicle roof according to any of the preceding claims, **characterized in that** the safety element (50) is a hollow section that is open towards the edge (20), which hollow section receives the edge (20) in it with a horizontal displacement of the edge (20) towards the safety element (50).

11. The vehicle roof according to any of the preceding claims, **characterized in that** the safety element (50) is a C-profile.

12. The vehicle roof according to any of claims 1 to 10, **characterized in that** the safety element is a double-T profile.

13. The vehicle roof according to any of the preceding claims, **characterized in that** the safety element (50) is a surrounding reinforcement frame of the roof module (12).

14. The vehicle roof according to claim 13, **characterized in that** the reinforcement frame has an annular and continuous design.

## Revendications

1. Toit de véhicule comprenant un cadre de toit (10) et un module de toit (12) fixé de façon permanente et rigide sur le cadre de toit (10),
le cadre de toit (10) présentant un bord (20) tourné vers l'intérieur par rapport au module de toit (12) et
dans la zone de la face inférieure du module de toit (12) est prévu un élément rigide de sécurité (50) ayant au moins un tronçon en saillie, tourné vers le bord (20) limitrophe, positionné plus profondément que le bord (20),
dans lequel, en cas d'une déformation lors de laquelle le cadre de toit (10) est déplacé horizontalement, l'élément de sécurité (50) s'engage derrière le bord (20), l'élément de sécurité (50) ne s'engage pas derrière le bord (20) avant qu'il y ait eu une déformation du cadre de toit (10), et l'élément de sécurité (50) est incorporé dans un moussage arrière (24), placé en face inférieure, d'une peau extérieure (22) du module de toit (12).

2. Toit de véhicule selon la revendication 1, **caractérisé en ce que** le bord (20) est un prolongement du genre d'une bride ou rebord, tourné vers l'intérieur, du cadre de toit (10).

3. Toit de véhicule selon la revendication 2, **caractérisé en ce que** le prolongement du genre d'une bride est un tronçon de tôle du genre d'une plaque.

4. Toit de véhicule selon l'une des revendications précédentes, **caractérisé en ce que** le module de toit (12) est fixé sur le bord (20).

5. Toit de véhicule selon la revendication 4, **caractérisé en ce que** le module de toit (12) est fixé par collage sur le bord (20).

6. Toit de véhicule selon la revendication 5, **caractérisé en ce que** le module de toit (12) est fixé sur le bord (20) en pourtour, par collage.

7. Toit de véhicule selon l'une des revendications précédentes, **caractérisé en ce que** le module de toit est assuré en plus sur le bord (20), par au moins une liaison vissée (60).

8. Toit de véhicule selon l'une des revendications précédentes, **caractérisé en ce que** l'élément de sécurité (50) est une tôle.

9. Toit de véhicule selon la revendication 8, **caractérisé en ce que** l'élément de sécurité (50) est complètement incorporé dans le moussage arrière (24).

10. Toit de véhicule selon l'une des revendications précédentes, **caractérisé en ce que** l'élément de sécurité (50) est un profil creux ouvert vers le bord (20), qui, en cas de déplacement horizontal du bord (20) vers l'élément de sécurité (50), reçoit en soi le bord (20).

11. Toit de véhicule selon l'une des revendications précédentes, **caractérisé en ce que** l'élément de sécurité (50) est un profilé en C.

12. Toit de véhicule selon l'une des revendications 1 à 10, **caractérisé en ce que** l'élément de sécurité est un profilé en T double.

13. Toit de véhicule selon l'une des revendications précédentes, **caractérisé en ce que** l'élément de sécurité (50) est un cadre de renforcement de pourtour du module de toit (12).

14. Toit de véhicule selon la revendication 13, **caractérisé en ce que** le cadre de renforcement est fermé en forme d'anneau.
